# EUROPÄISCHE PATENTSCHRIFT

(11) **EP 2 611 515 B1**
(45) Veröffentlichungstag und Bekanntmachung des Hinweises auf die Patenterteilung: **07.06.2023**
(21) Anmeldenummer: 11745694.7
(22) Anmeldetag: 11.08.2011
(51) Int. Cl.: B01D 29/21, B01D 29/58, B01D 35/06, B03C 1/28, B03C 1/01

(54) **FILTEREINHEIT ZUR FILTRATION VON FLUIDEN UND VERFAHREN ZUR HERSTELLUNG EINER DERARTIGEN FILTEREINHEIT**
FILTER UNIT FOR FILTERING FLUIDS AND METHOD FOR PRODUCING SUCH A FILTER UNIT
UNITÉ DE FILTRATION DE FLUIDES ET PROCÉDÉ DE FABRICATION D'UNE TELLLE UNITÉ

(30) Priorität: 01.09.2010 DE 102010035981
(43) Veröffentlichungstag der Anmeldung: 10.07.2013
(73) Patentinhaber: Hydac Filtertechnik GmbH, 66280 Sulzbach/Saar (DE)
(72) Erfinder: TRIER, Jessica, 66440 Blieskastel (DE); SAKRASCHINSKY, Michael, 66386 St. Ingbert (DE)
(74) Vertreter: Bartels und Partner, Patentanwälte
(86) Internationale Anmeldenummer: PCT/EP2011/004014
(87) Internationale Veröffentlichungsnummer: WO 2012/028253

(56) Entgegenhaltungen:
- WO-A1-97/22395
- WO-A2-00/24486
- DE-A1-102007 004 492
- GB-A- 1 498 375
- US-A- 2 999 275

## Beschreibung

Die Erfindung betrifft eine Filtereinheit zur Filtration von Fluiden, insbesondere von Hydraulikflüssigkeiten, mit den Merkmalen im Oberbegriff von Anspruch 1. Ferner betrifft die Erfindung ein Verfahren zur Herstellung einer derartigen Filtereinheit.

Über 70 % der Ausfälle von Schmier- und Hydrauliksystemen sind medienbedingt, d.h., dem Betriebsmedium fällt eine entscheidende Rolle in den hydraulischen Anlagen zu. Je sauberer das Medium ist und je besser dieses vor äußeren Einflüssen, wie Verschmutzungen in fester, flüssiger und/oder gasförmiger Form, geschützt wird, desto effizienter und wirtschaftlicher kann eine Anlage betrieben werden. Ziel einer Filtration ist, das Betriebsverhalten und die Lebensdauer der Komponenten einer hydraulischen Anlage zu verbessern bzw. zu erhöhen und auf diese Weise die Betriebskosten zu senken. Die Auswahl der optimalen Filtrationslösung trägt maßgeblich dazu bei, Schäden durch Verschmutzung oder Vermischung zu verhindern, die Anlagenverfügbarkeit zu erhöhen und somit die Produktivität merklich zu steigern. Die Intensität der Beschädigung von Komponenten ist abhängig vom Material der Verschmutzung, vom Betriebs(über)druck, von der Beschaffenheit (rund oder scharfkantig) sowie Größe und Anzahl der Schmutzpartikel. Hierbei wird oft verkannt, dass ein Großteil dieser Feststoffpartikel kleiner als 30 µm und mit dem bloßen Auge nicht erkennbar ist. Somit kann ein augenscheinlich sauberes Fluid tatsächlich bedenklich verschmutzt sein.

In Hydrauliksystemen gibt es verschiedene Arten von Filtereinheiten, die nach ihrem Einbauort und/oder ihrer Funktion benannt werden. Druckfilter liegen beispielsweise im Hauptstrom der Anlage (nach der Pumpe) und unterliegen besonderen Anforderungen an das Gehäuse durch den dort herrschenden höheren Druck. Ein Rücklauffilter hingegen liegt am Rücklauf der Anlage zum Tank und ist dort keinem hohen Druck ausgesetzt, kann also in einer leichten Gehäuseausführung eingebaut werden. Ein Filtergehäuse besteht aus einem Filterkopf, welcher den Einlass und den Auslass zur Verbindung mit dem Hydrauliksystem umfasst, und einen Filtertopf, in welchem ein Filterelement angeordnet ist. Das Filtergehäuse kann darüber hinaus noch mit einem Bypassventil und einer Verschmutzungsanzeige ausgestattet sein. Die im Filtergehäuse eingebauten Filterelemente übernehmen als Hauptbestandteil der Filtereinheit die eigentliche Filtrationsarbeit.

Aus DE 10 2007 004 492 A1 ist eine gattungsgemäße Filtereinheit bekannt. Das bekannte Filterelement zur Abreinigung von Fluiden weist einen einen Filterhohlraum umgebenden Mantelkörper mit Durchlässen für abgereinigtes Fluid, eine den Mantelkörper am einen Ende abschließende Endkappe, eine den Mantelkörper am anderen Ende abschließende Fassung mit mindestens einem Durchlass zum Einströmen des abzureinigenden Fluids in einen Einströmbereich innerhalb des Filterhohlraums, ein sich zwischen Endkappe und Fassung erstreckendes Filtermedium, das vom Einströmbereich her von dem zu reinigenden Fluid durchströmbar ist, und zumindest ein permanentmagnetisches Bauteil, das sich von der Innenseite der Fassung her in den Einströmbereich hinein erstreckt.

Als magnetisches Bauteil ist zumindest eine stabartige Magnetkerze vorgesehen, die sich von der Fassung weg entlang einer Längsrichtung des Filterelements in Richtung der Endkappe erstreckt. Dadurch, dass sich das Magnetsystem hierbei über einen Längenbereich des Filterhohlraumes erstreckt, erfolgt eine magnetische Vorfiltration. Die lösbare Sicherung ermöglicht es, die Magnetkerzen beispielsweise für Wartungs- oder Diagnosezwecke separat auszubauen. Bei der bekannten Filtereinheit ist zusätzlicher konstruktiver Aufwand und Einbauraum im Filterelement für die Magnetkerzen erforderlich. Darüber hinaus können die im Einströmbereich angeordneten Magnetkerzen den Fluidstrom in nicht gewünschter Weise beeinflussen.

Weitere Filtereinheiten gehen aus der GB 1 498 375, der WO 00/24486 A2 und der WO 97/22395 A1 hervor. Ein Verfahren zur Ausrichtung von magnetisch anisotropen Partikeln wird in der US 2 999 275 aufgezeigt.

Gegenüber diesem Stand der Technik stellt sich die Erfindung die Aufgabe, mit einem vereinfachten konstruktiven Aufwand eine magnetische Abscheidung von Verschmutzungen in einem eine Filtereinheit durchströmenden Fluid zu erreichen.

Die Aufgabe wird erfindungsgemäß gelöst durch eine Filtereinheit mit den Merkmalen des Patentanspruchs 1 in seiner Gesamtheit.

Gemäß dem Kennzeichen von Anspruch 1 ist vorgesehen, dass das Bauteil zumindest bereichsweise einen Auftrag von magnetisierbaren und/oder magnetisierten Partikeln aufweist; und dass das Filterelement ein Mesh-Pack ist, das pliseeartig bzw. sternförmig aufgefaltet und um das Stützrohr ringförmig angeordnet ist.

Dadurch, dass das Bauteil zumindest bereichsweise einen Auftrag von magnetisierbaren und/oder magnetisierten Partikeln aufweist, erhält dieses Bauteil eine Zusatzfunktion und ein gesondertes magnetisches Bauteil, wie Magnetkerzen, kann entfallen. Somit kann eine magnetische Abscheidefunktion in eine Filtereinheit kleiner Baugröße und insbesondere an einem den Fluidstrom nicht beeinträchtigenden Bauteil angeordnet werden. Der Ein- bzw. Auftrag der magnetisierbaren bzw. magnetisierten Partikel erweist sich als relativ unkompliziert, da dieses in die Herstellung des Bauteils bzw. der Filtereinheit integriert werden kann.

In einer bevorzugten Ausführungsform des erfindungsgemäßen Bauteils sind die Partikel ferromagnetisch, insbesondere Neodym-Eisen-Bor-Partikel. Die Werkstoffkombination Neodym-Eisen-Bor zeigt gute Eigenschaften eines Permanentmagneten.

Weiter ist es vorteilhaft, dass die Größe der Partikel im µm-Bereich, insbesondere im nm-Bereich, liegt. Ein Auftrag von Partikeln einer solchen Größe lässt sich in einer sehr dünnen Lage bzw. Schicht auf das Bauteil auftragen, so dass kaum Bauraum beansprucht wird, und darüber hinaus über eine Suspension ein einfacher, insbesondere homogener Partikelauftrag erreicht werden kann.

In einer weiteren bevorzugten Ausführungsform der Erfindung ist der Auftrag als eine Beschichtung von zumindest einem Flächenbereich des Bauteils ausgebildet. Eine Beschichtung lässt sich einfach, beispielsweise mit Hilfe einer Spritzpistole, und mit der gewünschten dünnen Auftragsdicke auf das Bauteil aufbringen.

Weiter ist es vorteilhaft, dass die Beschichtung zumindest eine Lackschicht eines Beschichtungslackes umfasst, insbesondere aus mehreren, bevorzugt vier, Lackschichten gebildet sein kann. Es hat sich gezeigt, dass hier ein Nanopartikel enthaltender Beschichtungslack eingesetzt werden kann, welcher bei einem Auftrag in vier Lackschichten, mit möglichst gleicher Schichtdicke und überkreuz aufgebracht, ein gutes Ergebnis hinsichtlich Haftung, Magnetisierung und Magnetfeldstärke erzielt.

Zweckmäßigerweise ist das Bauteil mit Durchlässen für ein Fluid versehen, insbesondere perforiert und/oder siebartig ausgebildet. Hieraus ergibt sich der Vorteil, dass das erfindungsgemäß modifizierte Bauteil im Strom eines zu filtrierenden Fluids angeordnet werden kann und eine größtmögliche Filtrationswirkung durch die magnetischen Partikel erreicht werden kann. Hierbei kann das Bauteil am Filtergehäuse, am Filterkorb oder am Filterelement selbst angeordnet sein bzw. integraler Bestandteil derselben sein. Es ist zudem zweckmäßig, den Auftrag an einem einer Unfiltratseite zugeordneten Flächenbereich des Bauteiles vorzusehen. Somit können metallische Festkörper- bzw. Schmutzpartikel möglichst früh aus dem zu filtrierenden Fluid entfernt werden und somit eine Verschmutzung von nachfolgenden Filterelementen bzw. Filterbauteilen vermieden werden.

In einer weiteren besonderen Ausgestaltung des erfindungsgemäßen Bauteils ist zumindest eine Fläche des Bauteiles vollflächig mit dem Auftrag, insbesondere mit der Beschichtung, versehen. In dieser Ausgestaltung steht eine größtmögliche Fläche zur magnetischen Vorfiltration zur Verfügung. Insbesondere kann ein vom Fluid durchströmtes Bauteil an einer Außen- bzw. Unfiltratseite und an einer Innen- bzw. Filtratseite eines von außen nach innen durchströmten Filterelements mit den magnetischen Partikeln versehen sein, um eine bestmögliche Abscheidung von metallischen Schmutzpartikeln zu erreichen.

Das erfindungsgemäße Bauteil ist Teil eines mehrlagigen Filterelements. Das mehrlagige Filterelement ist ein sogenannter Mesh-Pack mit sternförmig gefalteten Filter- und Stützlagen, welche um ein stabilisierendes Stützrohr gelegt und durch eine äußere Filtermatte lagestabil gehalten sind. Je nach Filtermaterial ist die Filtermatte von einer äußeren Hülle, insbesondere einer Kunststoffhülle, umgeben. In den meisten Fällen wird ein derartiges typischerweise rohrzylinderförmiges Filterelement von außen nach innen durchströmt. Im Einzelfall kann auch eine Durchströmung von innen nach außen, beispielsweise zu Reinigungszwecken, erfolgen und hierbei insbesondere das Stützrohr und/oder die Hülse entfallen.

Das erfindungsgemäße Bauteil ist als Folie, Hülse oder Mantel ausgebildet welche ein außen-, innen-oder umfangseitig angeordnetes Stützmittel für ein Filterelement ist. Auf diese Weise wird die Filtrationsleistung des Filterelements durch eine magnetische Vorfiltration erhöht und darüber hinaus das Filterelement vor zusätzlicher Verschmutzung geschützt. Durch die Hülse wird das Mesh-Pack an das Stützrohr gepresst und die Falten sind fixiert. Dadurch entsteht eine kompakte Bauform. Zudem ist das empfindliche sternförmig gefaltete Mesh-Pack vor direktem Anströmen und vor Pulsation des Betriebsmediums geschützt. Die Hülse dient zudem als Diffusor, welcher für eine gleichmäßige Verteilung des anströmenden Fluids auf das Mesh-Pack dient. Darüber hinaus wird eine direkte Anströmung und eine Zerstörung durch Schmutzpartikel des Mesh-Packs vermieden.

In einer bevorzugten Ausführungsform ist das erfindungsgemäße Bauteil zumindest teilweise aus einem bevorzugt temperaturbeständigen, medienverträglichen und/oder recycelbaren Kunststoffmaterial ausgebildet. Das erfindungsgemäß modifizierte Kunststoffbauteil entspricht folgenden Kriterien zur Verwendung in einer Filtereinheit idealerweise vollständig: Dicke < 0,3 mm, bedruckbar, beständig in einem Temperaturbereich von -30 °C bis + 120 °C, lochbar, medienverträglich, schweißbar.

Die Erfindung umfasst weiter eine Filtereinheit zur Filtration von Fluiden mit zumindest einem erfindungsgemäßen Bauteil, welches zumindest teilweise im Strom des zu filtrierenden Fluids angeordnet ist. Die erfindungsgemäß ausgestatte Filtereinheit zeichnet sich durch eine verbesserte Filtrationsleistung und folglich ein verbessertes Betriebsverhalten aus. Das die magnetischen Partikel aufweisende Bauteil wird vom zu reinigenden Fluid an-, um- und/oder durchströmt.

In einer bevorzugten Ausführungsform der erfindungsgemäßen Filtereinheit ist ein Tiefenfilter vorgesehen und das mindestens eine Bauteil im Fluidstrom vor dem Tiefenfilter angeordnet. Die Filtration von Feststoffpartikeln, die kleiner als 25 µm und hauptsächlich für die Zuverlässigkeit der Anlage verantwortlich sind, ist nur mit qualitativ hochwertigen Tiefenflächenfiltern möglich. Die in den Tiefenflächenfiltern eingebauten Filtermaterialien haben feinste, von Fasern geformte Poren unterschiedlicher Größe, welche sich über das gesamte Filtermaterial verteilen. Sie weisen daher eine hohe Schmutzspeicherung bei gleichfalls hoher Partikelabscheidung bis hin zu kleinsten Partikeln auf. Zur Erhöhung dieser, für den Anlagenbetreiber wichtigen Qualitätsmerkmale sind hochwertige Filterelemente mehrlagig, aus einem Vorfiltervlies und einem Hauptfiltervlies, aufgebaut. Durch Anordnung des magnetischen Bauteils im Fluidstrom vor dem Vorfiltervlies wird eine Vorfiltration durch magnetische Abscheidung von metallischen Schmutzpartikeln erreicht, was zu einer Verbesserung der Filtrationsleistung des Tiefenflächenfilters führt.

Gegenstand der Erfindung ist weiter ein Verfahren zur Herstellung einer Filtereinheit zur Filtration von Fluiden, insbesondere zur Herstellung eines erfindungsgemäßen Bauteils, wobei das Bauteil zumindest bereichsweise mit einem Auftrag von magnetisierbaren und/oder magnetisierten Partikeln versehen wird. Die Verfahrensschritte können sich an das Verfahren zur Herstellung des Bauteiles anschließen bzw. in dieses integriert sein, jedoch auch unabhängig davon durchgeführt werden, insbesondere optimiert auf den Einsatzzweck des mit magnetisierbaren und/oder magnetisierten Partikeln funktionalisierten Bauteiles.

In einer bevorzugten Variante des erfindungsgemäßen Verfahrens werden die Partikel als Beschichtung in zumindest einem Flächenbereich des Bauteiles aufgetragen. Hierbei ist es zudem vorteilhaft, zumindest eine Lackschicht eines Beschichtungslacks in dem zumindest einen Flächenbereich auf das Bauteil aufzubringen, insbesondere mehrere, bevorzugt vier, Lackschichten aufzubringen. In dieser Variante kann in einfacher Weise eine über den Flächenbereich gleichmäßige Magnetisierung des Bauteils erreicht werden.

In einer weiteren Variante des erfindungsgemäßen Verfahrens wird in einem anschließenden Verfahrensschritt die Beschichtung durch Erwärmung des Bauteiles und/oder durch Bestrahlung, insbesondere mit UV-Licht, ausgehärtet. Das Aushärten kann in einem Laborwärmeschrank durchgeführt werden, typischerweise 15 Minuten bei 120 °C. In Abhängigkeit der Größe der beschichteten Folie bzw. des behandelten Bauteils ist die Dimension einer Temperiervorrichtung, wie eines Laborwärmeschranks, zu wählen. Die Verwendung eines mit UV-Licht aushärtbaren Beschichtungsmaterials hat den zusätzlichen Vorteil, dass dieses in einer herkömmlichen Druckmaschine aufgetragen und gleichzeitig ausgehärtet werden kann. Somit kann das erfindungsgemäße Verfahren im zur Herstellung des Bauteils durchgeführten Verfahren und insbesondere mit den dabei verwendeten Vorrichtungen durchgeführt werden. Durch Verwendung einer zum Auftrag von Lacken und Dispersionsfarben geeigneten Spritzpistole, insbesondere mit Druckluft oder einer Pumpe wird ein gleichmäßigerer Oberflächenauftrag erzielt im Vergleich zu einem manuellen Auftrag mittels eines Pinsels.

Vorteilhafterweise werden die ein- bzw. aufgetragenen Partikel durch ein äußeres Magnetfeld magnetisiert. Auf diese Weise wird die zum Anziehen ferromagnetischer Partikel aus dem Medium bzw. zu reinigenden Fluid erforderliche magnetische Feldstärke erzeugt und bedarfsgerecht eingestellt. Bei mehreren Lackschichten kann eine besonders hohe Magnetisierung erreicht werden. Beim Magnetisieren des entsprechenden Oberflächenbereichs werden die magnetischen Teilchen durch ein äußeres Magnetfeld ausgerichtet. Das äußere Magnetfeld wird zweckmäßigerweise durch einen Permanentmagneten, insbesondere einen Neodym-Eisen-Bor-Magneten, oder durch einen Elektromagneten erzeugt. Im Gegensatz zu einem Elektromagneten behält ein Permanentmagnet sein statisches Magnetfeld auch ohne einen Stromfluss bei. Zur Erzeugung eines ausreichend hohen äußeren Magnetfelds ist ein entsprechendes Material zu wählen. Mittels eines Gradiometers kann die Magnetisierung des Bauteils überprüft werden. Eine Entmagnetisierung des in eine Filtereinheit eingebauten Bauteils durch ein Invertmagnetfeld, eine Erwärmung oberhalb der Curie-Temperatur und/oder große mechanische Belastungen können beim typischen Betrieb einer hydraulischen Anlage weitestgehend ausgeschlossen werden.

In einer weiteren bevorzugten Variante des erfindungsgemäßen Verfahrens wird das Bauteil insbesondere im den Auftrag aufweisenden Flächenbereich bevorzugt farbig bedruckt. Auf das Bauteil können ein Firmenlogo und/oder eine Typenbezeichnung aufgedruckt werden. Neben einem Werbe- und Informationseffekt ist es leichter, die demgemäß bedruckten Bauteile bzw. Filtereinheiten von möglicherweise nachgebauten Produkten zu unterscheiden und somit das Ersatzteilgeschäft für die Firmen zu sichern. In Abhängigkeit der Farbe des Ein- bzw. Auftrags, insbesondere des Beschichtungslacks, wird die Farbe für eine Bedruckung kontrastreich gewählt, beispielsweise rot. Bei einem dunkelgrauen oder dergleichen Hintergrund ist ebenfalls eine Bedruckung mit weißer Farbe denkbar.

Weitere Vorteile und Merkmale der Erfindung ergeben sich aus der folgenden Beschreibung und den Figuren der Zeichnung. Die in den Figuren gezeigten Merkmale sind rein schematisch und nicht maßstäblich zu verstehen. Es zeigt:
- Fig. 1: eine Filtereinheit nach dem Stand der Technik;
- Fig. 2: ein erfindungsgemäßes Bauteil in Form eines Filterelements mit magnetisierter Folie;
- Fig. 3a und 3b: jeweils eine Draufsicht auf einen Abschnitt eines erfindungsgemäßen Bauteiles in Form einer Folie mit mehreren Lackschichten; und
- Fig. 4: einen Endbereich eines erfindungsgemäßen Bauteils mit einem Filterelement in vergrößerter, perspektivischer Darstellung.

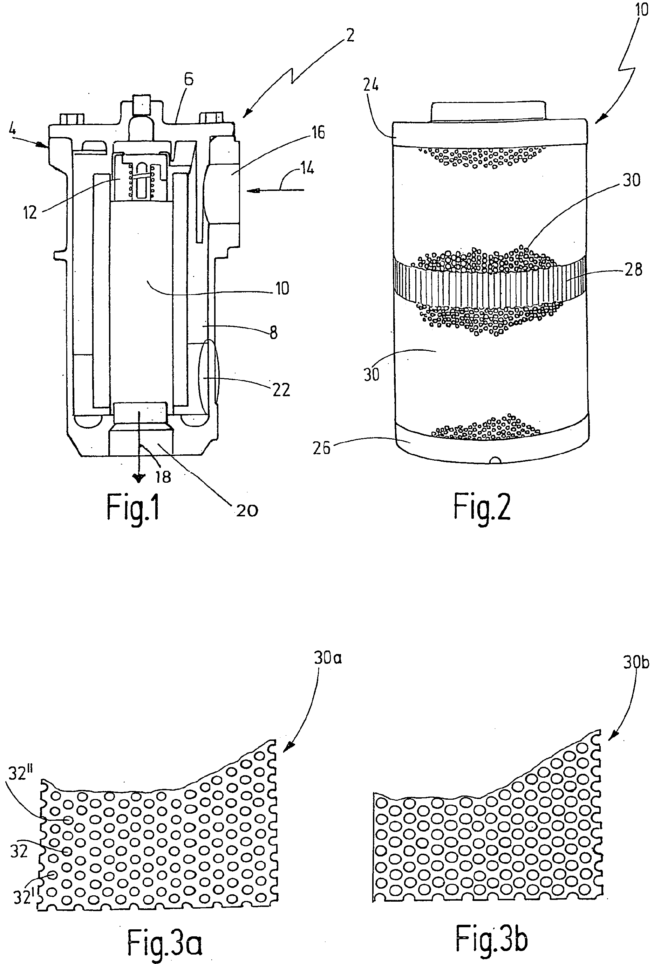

Fig. 1 zeigt eine aus dem Stand der Technik bekannte Filtereinheit 2 in teilweise aufgeschnittener Darstellung. Ein Filtergehäuse 4 der Filtereinheit 2 besteht aus einem Filterkopf 6 und einem Filtertopf 8, in welchem ein Filterelement 10 angeordnet ist. Das Filterelement 10 erstreckt sich rohrzylinderförmig um ein im Bereich des Filterkopfs 6 gezeigtes Stützrohr 12. Zu reinigendes Fluid wird in einer Einströmrichtung 14 an einem im Filtergehäuse 4 vorgesehenen Einlass 16 in den Filtertopf 8 geführt, durchströmt das Filterelement 10 von außen nach innen und verlässt die Filtereinheit 2 in Ausströmrichtung 18 durch einen Auslass 20. Um metallische Schmutzpartikel vom Unfiltrat abzuscheiden, ist am unteren, dem Filterkopf 6 entgegengesetzten Ende des Filtertopfs 8 ein Magnetband 22 ringförmig im Innenraum des Filtertopfs 8 angeordnet.

In Fig. 2 ist ein erfindungsgemäß modifiziertes Filterelement 10 dargestellt. Zwischen einer oberen Endkappe 24 und einer unteren Endkappe 26 erstreckt sich ein Mesh-Pack 28, welches lediglich als Streifen in einem mittleren Bereich des Filterelements 10 sichtbar ist. Das Mesh-Pack 28 ist von einer zweiteiligen Folie 30 ummantelt. Es ist zweckmäßig, eine der kompletten Längenerstreckung des Filterelements 10 bzw. des Mesh-Packs 28 entsprechende Folie vorzusehen. Die Folie 30 ist aus einem temperaturbeständigen, medienverträglichen Kunststoff hergestellt und zum Durchlass von zu reinigendem Fluid perforiert ausgebildet. Auf der gezeigten Außenseite der Folie 30 ist diese vollflächig mit einer Beschichtung mit magnetisierbaren Partikeln versehen und anschließend magnetisiert worden. Somit stellt die Folie 30 eine magnetische Vorfiltration zur Abscheidung von metallischen Schmutzpartikeln aus einem zu reinigenden Fluid sicher. Zur Verbesserung dieser Filtrations- bzw. Abscheidewirkung kann die Folie 30 an einer (nicht gezeigten) Innenseite zusätzlich mit einer Beschichtung mit magnetischen Partikeln versehen sein. Aus Fig. 2 wird deutlich, dass die zur Lagestabilisierung des Mesh-Packs 28 eingesetzte Folie 30 zusätzlich eine magnetische Vorfiltrationswirkung innehat.

In Fig. 3a und 3b sind in Draufsicht Abschnitte der beschichteten und magnetisierten Folie 30a bzw. 30b gezeigt. Die Folien 30a und 30b unterscheiden sich durch die Anzahl der aufgebrachten Lackschichten, vier bei Folie 30a und sechs bei Folie 30b. Die Folien 30a, 30b weisen Perforationslöcher 32, 32', 32" zum Fluiddurchtritt auf. Zur Überprüfung der Funktionsfähigkeit der Folien 30a, 30b werden diese gewogen, in eine Filtereinheit 2 eingesetzt und nach einer bestimmten Betriebsdauer, insbesondere unter der gezielten Zusetzung von metallischen Schmutzpartikeln, wie Eisenpulver, erneut gewogen. Die gemessene Gewichtsdifferenz ergibt sich aus den angezogenen bzw. aus dem Fluid abgeschiedenen Schmutzpartikel und ist ein Maß für die Filtrationswirkung der Folien 30a, 30b. Hier ist der Einsatz einer Laborwaage zumindest im Testbetrieb zweckmäßig. Die Perforationslöcher 32, 32', 32" der Folien 30a bzw. 30b setzen sich mit zunehmender Ansammlung von metallischen Schmutzpartikeln auf den Folien 30a bzw. 30b zu, mit anderen Worten wird ihr Durchmesser geringer. Um störende Auswirkungen auf das Durchströmverhalten zu vermeiden, sind die Perforationslöcher 32, 32', 32" entsprechend zu dimensionieren.

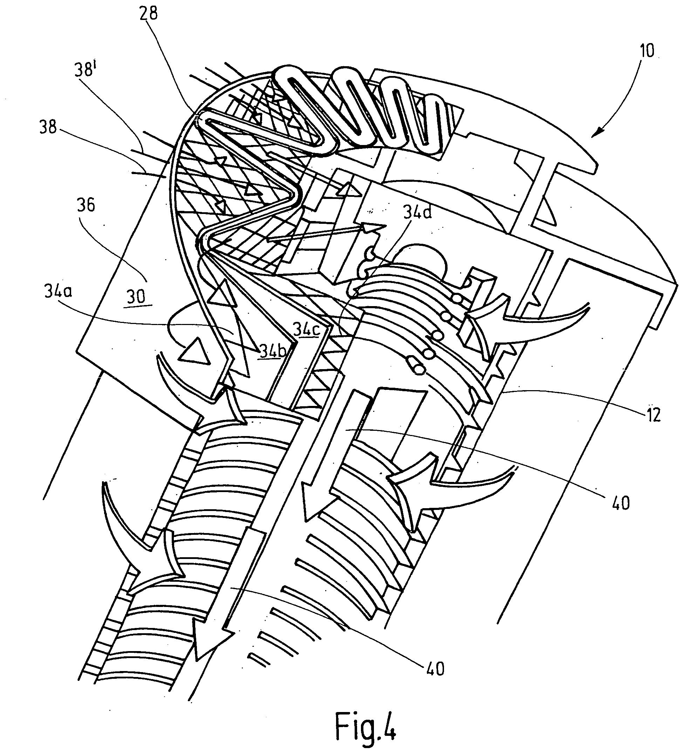

In Fig. 4 ist das Filterelement 10 mit dem Mesh-Pack 28 in vergrößerter, teilweise aufgeschnittener Perspektive gezeigt. Das Mesh-Pack ist pliseeartig bzw. sternförmig aufgefaltet und um das Stützrohr 12 ringförmig angeordnet. Die Lagen 34a, 34b, 34c, 34d des Mesh-Packs 28 sind auf die Anforderungen in der Anlage und die Filtereinheit 2 optimal abgestimmt, gegenüber Druckspitzen und wechselnden Volumenströmen beständig und als Stützgewebe, Stützvlies, Hauptfiltervlies und/oder Vorfiltervlies ausgebildet. Der besseren Darstellung wegen sind einzelne Filterfalten des Mesh-Pack 28 teilweise auseinandergezogen dargestellt, und die Anordnung der Lagen 34a - 34d ergibt sich aus der dem Betrachter zugewandten Teildarstellung. Durch eine Längsnahtschweißung der Folie 30 ist eine Hülse 36 ausgebildet, welche das Mesh-Pack 28 umgibt und dieses unter einer radialen Spannung am Stützrohr 12 festlegt. Das Stützrohr 12 besteht aus Stahl und/oder Kunststoff. Mit Pfeilen 38, 38' ist eine Durchflussrichtung durch die Hülse 36 und das Mesh-Pack 28 angedeutet, anders ausgedrückt, das Filterelement 10 wird von außen nach innen durchströmt. Durch die Magnetisierung der Hülse 36 werden metallische Partikel bereits dort zurückgehalten. Mit weiteren Pfeilen 40 ist die Fluidrichtung im Stützrohr 12 angedeutet.

Die Funktionalisierung bzw. Magnetisierung eines Bauteils, wie der Folie 30 bzw. der Hülse 36 ist nicht auf das Filterelement 10 beschränkt, sondern kann an jedem anderen Bauteil der Filtereinheit 2, wie dem Filtergehäuse 4, insbesondere dem Filtertopf 8, vorgesehen sein. Weiter können mehrere Bauteile entsprechend den abzuscheidenden metallischen Schmutzpartikeln magnetisiert und im Fluidstrom angeordnet werden. Vielfältige bedarfsgerechte Ausgestaltungen sind hier vorstellbar.

## Patentansprüche

1. Filtereinheit (2) zur Filtration von Fluiden, insbesondere von Hydraulikflüssigkeiten, mit mindestens einem Bauteil (30, 36), wobei sich ein Filterelement (10) rohrzylinderförmig um ein Stützrohr (12) erstreckt, wobei das Bauteil (30, 36) Teil des Filterelements (10) ist, zumindest teilweise im Strom eines zu filtrierenden Fluids angeordnet ist und als Folie (30), Hülse (36) oder Mantel ausgebildet ist, welche ein außen-, oder umfangsseitig angeordnetes Stützmittel für das Filterelement (10) ist, **dadurch gekennzeichnet, dass** das Bauteil (30, 36) zumindest bereichsweise einen Auftrag von magnetisierbaren und/oder magnetisierten Partikeln aufweist; und dass das Filterelement (10) ein Mesh-Pack ist, das pliseeartig bzw. sternförmig aufgefaltet und um das Stützrohr (12) ringförmig angeordnet ist.

2. Filtereinheit (2) nach Anspruch 1, **dadurch gekennzeichnet, dass** die Partikel ferromagnetisch, insbesondere Neodym-Eisen-Bor-Partikel, sind.

3. Filtereinheit (2) nach Anspruch 1 oder 2, **dadurch gekennzeichnet, dass** die Größe der Partikel im µm-Bereich, insbesondere im nm-Bereich, liegt.

4. Filtereinheit (2) nach einem der vorhergehenden Ansprüche, **dadurch gekennzeichnet, dass** der Auftrag als eine Beschichtung von zumindest einem Flächenbereich des Bauteils (30, 36) ausgebildet ist.

5. Filtereinheit (2) nach Anspruch 4, **dadurch gekennzeichnet, dass** die Beschichtung zumindest eine Lackschicht eines Beschichtungslackes umfasst, insbesondere aus mehreren, bevorzugt vier, Lackschichten gebildet ist.

6. Filtereinheit (2) nach einem der vorhergehenden Ansprüche, **dadurch gekennzeichnet, dass** das Bauteil (30, 36) mit Durchlässen (32, 32', 32") für ein Fluid versehen, insbesondere perforiert und/oder siebartig ausgebildet, ist.

7. Filtereinheit (2) nach einem der vorhergehenden Ansprüche, **dadurch gekennzeichnet, dass** der Auftrag an einem einer Unfiltratseite zugeordneten Flächenbereich des Bauteiles (30, 36) vorgesehen ist.

8. Filtereinheit (2) nach einem der vorhergehenden Ansprüche, **dadurch gekennzeichnet, dass** zumindest eine Fläche des Bauteiles (30, 36) vollflächig mit dem Auftrag, insbesondere mit der Beschichtung, versehen ist.

9. Filtereinheit (2) nach einem der vorhergehenden Ansprüche, **dadurch gekennzeichnet, dass** das Filterelement (10) mehrlagig ist.

10. Filtereinheit (2) nach einem der vorhergehenden Ansprüche, **dadurch gekennzeichnet, dass** das Bauteil (30, 36) zumindest teilweise aus einem bevorzugt temperaturbeständigen, medienverträglichen und/ oder recyclebaren Kunststoffmaterial gebildet ist.

11. Filtereinheit (2) nach einem der vorhergehenden Ansprüche, **dadurch gekennzeichnet, dass** ein Tiefenfilter vorgesehen ist und das mindestens eine Bauteil (30, 36) im Fluidstrom vor dem Tiefenfilter angeordnet ist.

12. Verfahren zur Herstellung einer Filtereinheit (2) zur Filtration von Fluiden nach einem der Ansprüche 1 bis 11, **dadurch gekennzeichnet, dass** das Bauteil (30, 36) zumindest bereichsweise mit einem Auftrag von magnetisierbaren und/oder magnetisierten Partikeln versehen wird.

13. Verfahren nach Anspruch 12, **dadurch gekennzeichnet, dass** die Partikel als Beschichtung in zumindest einem Flächenbereich des Bauteils (30, 36) aufgetragen werden.

14. Verfahren nach Anspruch 13, **dadurch gekennzeichnet, dass** zumindest eine Lackschicht eines Beschichtungslacks in dem zumindest einen Flächenbereich auf das Bauteil (30, 36) aufgebracht wird, insbesondere wobei mehrere, bevorzugt vier, Lackschichten aufgebracht werden.

15. Verfahren nach Anspruch 13 oder 14, **dadurch gekennzeichnet, dass** in einem anschließenden Verfahrensschritt die Beschichtung durch Erwärmung des Bauteiles (30, 36) und/oder durch Bestrahlung, insbesondere mit UV-Licht, ausgehärtet wird.

16. Verfahren nach einem der Ansprüche 12 bis 15, **dadurch gekennzeichnet, dass** die Partikel durch ein äußeres Magnetfeld magnetisiert werden.

17. Verfahren nach Anspruch 16, **dadurch gekennzeichnet, dass** das äußere Magnetfeld durch einen Permanentmagneten, insbesondere einen Neodym-Eisen-Bor-Magneten, erzeugt wird.

18. Verfahren nach Anspruch 16, **dadurch gekennzeichnet, dass** das äußere Magnetfeld durch einen Elektromagneten erzeugt wird.

19. Verfahren nach einem der Ansprüche 12 bis 18, **dadurch gekennzeichnet, dass** das Bauteil (30, 36) insbesondere im den Auftrag aufweisenden Flächenbereich bevorzugt farbig bedruckt wird.

## Claims

1. Filter unit (2) for the filtration of fluids, in particular hydraulic fluids, with at least one component (30, 36), wherein a filter element (10) extends cylindrically around a supporting tube (12), wherein the component (30, 36) is part of the filter element (10), is arranged at least partially in the flow of a fluid to be filtered and is formed as a film (30), sleeve (36) or casing which is a supporting means, arranged on the outside or circumferentially, for the filter element (10), **characterised in that** the component (30, 36) has, at least in certain areas, an application of magnetisable and/or magnetised particles; and **in that** the filter element (10) is a mesh pack which is folded in a pleat-like manner or a star shape and is arranged annularly around the supporting tube (12).

2. Filter unit (2) according to claim 1, **characterised in that** the particles are ferromagnetic, in particular neodymium-iron-boron particles.

3. Filter unit (2) according to claim 1 or 2, **characterised in that** the size of the particles is in the µm range, in particular in the nm range.

4. Filter unit (2) according to one of the preceding claims, **characterised in that** the application is formed as a coating of at least one surface region of the component (30, 36).

5. Filter unit (2) according to claim 4, **characterised in that** the coating comprises at least one coating layer of a coating lacquer, in particular is formed from a plurality of, preferably four, coating layers.

6. Filter unit (2) according to one of the preceding claims, **characterised in that** the component (30, 36) is provided with apertures (32, 32', 32") for a fluid, in particular is perforated and/or sieve like.

7. Filter unit (2) according to one of the preceding claims, **characterised in that** the application is provided on a surface region of the component (30, 36) associated with an unfiltered medium side.

8. Filter unit (2) according to one of the preceding claims, **characterised in that** at least one surface of the component (30, 36) is provided with the application, in particular with the coating, over the entire surface.

9. Filter unit (2) according to one of the preceding claims, **characterised in that** the filter element (10) is multi-layered.

10. Filter unit (2) according to one of the preceding claims, **characterised in that** the component (30, 36) is formed, at least partially, of a preferably temperature-resistant, media-compatible and/or recyclable plastic material.

11. Filter unit (2) according to one of the preceding claims, **characterised in that** a depth filter is provided and that at least one component (30, 36) is arranged in the fluid flow upstream of the depth filter.

12. Method for manufacturing a filter unit (2) for the filtration of fluids according to one of claims 1 to 11, **characterised in that** the component (30, 36) is provided, at least in certain areas, with an application of magnetisable and/or magnetised particles.

13. Method according to claim 12, **characterised in that** the particles are applied as a coating in at least one surface region of the component (30, 36).

14. Method according to claim 13, **characterised in that** at least one coating layer of a coating lacquer is applied to the component (30, 36) in the at least one surface region, in particular wherein a plurality of, preferably four, coating layers are applied.

15. Method according to claim 13 or 14, **characterised in that**, in a subsequent process step, the coating is cured by heating the component (30, 36) and/or by irradiation, in particular with UV light.

16. Method according to one of claims 12 to 15, **characterised in that** the particles are magnetised by an external magnetic field.

17. Method according to claim 16, **characterised in that** the external magnetic field is generated by a permanent magnet, in particular a neodymium-iron-boron magnet.

18. Method according to claim 16, **characterised in that** the external magnetic field is generated by an electromagnet.

19. Method according to one of claims 12 to 18, **characterised in that** the component (30, 36) is preferably printed in colour, in particular in the surface region having the application.

## Revendications

1. Unité (2) de filtration pour la filtration de fluides, notamment de liquides hydrauliques, comprenant au moins une pièce (30, 36), dans laquelle un élément (10) de filtre s'étend en forme de cylindre tubulaire autour d'un tube (12) d'appui, dans laquelle la pièce (30, 36) est une partie de l'élément (10) de filtre, est disposée au moins en partie dans le courant d'un fluide à filtrer et est constituée sous la forme d'une feuille (30), d'un manchon (36) ou d'une enveloppe, qui est un moyen d'appui, disposé à l'extérieur ou du côté du pourtour, de l'élément (10) de filtre, **caractérisée en ce que** la pièce (30, 36) a, au moins par endroits, un dépôt de particules aimantables et/ou aimantées ; et **en ce que** l'élément (10) de filtre est un pack Mesh, qui est plié de type en plissé ou en forme d'étoile, et **en ce que** le tube (12) d'appui est disposé annulairement.

2. Unité (2) de filtration suivant la revendication 1, **caractérisée en ce que** les particules sont ferromagnétiques, en étant notamment des particules de néodyme-fer-bore.

3. Unité (2) de filtration suivant la revendication 1 ou 2, **caractérisée en ce que** la dimension des particules est dans le domaine du µm, notamment dans le domaine du nm.

4. Unité (2) de filtration suivant l'une des revendications précédentes, **caractérisée en ce que** le dépôt est formé sous la forme d'un revêtement d'au moins une partie de la surface de la pièce (30, 36).

5. Unité (2) de filtration suivant la revendication 4, **caractérisée en ce que** le revêtement comprend au moins une couche de vernis d'un vernis de revêtement en étant formé, notamment de plusieurs, de préférence de quatre couches de vernis.

6. Unité (2) de filtration suivant l'une des revendications précédentes, **caractérisée en ce que** la pièce (30, 36) est pourvue de passages (32, 32', 32") pour un fluide, en étant notamment perforée et/ou à la manière d'un tamis.

7. Unité (2) de filtration suivant l'une des revendications précédentes, **caractérisée en ce que** le dépôt est prévu sur une partie de surface, associée au côté de non filtrat, de la pièce (30, 36).

8. Unité (2) de filtration suivant l'une des revendications précédentes, **caractérisée en ce qu'**au moins une surface de la pièce (30, 36) est pourvue complètement du dépôt, notamment du revêtement.

9. Unité (2) de filtration suivant l'une des revendications précédentes, **caractérisée en ce que** l'élément (10) de filtre est à plusieurs couches.

10. Unité (2) de filtration suivant l'une des revendications précédentes, **caractérisée en ce que** la pièce (30, 36) est formée au moins en partie d'une matière plastique recyclable et/ou compatible avec des fluides, qui, de préférence, est résistante à la température.

11. Unité (2) de filtration suivant l'une des revendications précédentes, **caractérisée en ce qu'**il est prévu un filtre profond et **en ce que** la au moins une pièce (30, 36) est disposée dans le courant de fluide avant le filtre profond.

12. Procédé de fabrication d'une unité (2) de filtration pour la filtration de fluides suivant l'une des revendications 1 à 11, **caractérisé en ce que** l'on munit la pièce (30, 36), au moins par endroits, d'un dépôt de particules aimantables et/ou aimantées.

13. Procédé suivant la revendication 12, **caractérisé en ce que** l'on dépose des particules en revêtement sur au moins une partie de la surface de la pièce (30, 36).

14. Procédé suivant la revendication 13, **caractérisé en ce que** l'on dépose au moins une couche de vernis d'un vernis de revêtement sur la au moins une partie de surface de la pièce (30, 36), dans lequel, notamment on dépose plusieurs, de préférence, quatre couches de vernis.

15. Procédé suivant la revendication 13 ou 14, **caractérisé en ce que**, dans un stade de procédé venant ensuite, on durcit le revêtement par chauffage de la pièce (30, 36) ou par exposition à un rayonnement, notamment à de la lumière UV.

16. Procédé suivant l'une des revendications 12 à 15, **caractérisé en ce que** l'on aimante les particules par un champ magnétique extérieur.

17. Procédé suivant la revendication 16, **caractérisé en ce que** l'on produit le champ magnétique extérieur par un aimant permanent, notamment par un aimant au néodyme-fer-bore.

18. Procédé suivant la revendication 16, **caractérisé en ce qu'**on produit le champ magnétique extérieur par un électroaimant.

19. Procédé suivant l'une des revendications 12 à 18, **caractérisé en ce que** l'on imprime, de préférence en couleur, la pièce (30, 36), notamment dans la partie de la surface ayant le dépôt.
